Europäisches Patentamt

European Patent Office

Office européen des brevets

(19)

(11) Numéro de publication : **0 048 649**
**B1**

(12) ## FASCICULE DE BREVET EUROPÉEN

(45) Date de publication du fascicule du brevet :
26.06.85

(51) Int. Cl.⁴ : **B 64 C 27/46**

(21) Numéro de dépôt : 81401358.7

(22) Date de dépôt : 27.08.81

(54) **Profil de pale pour voilure tournante d'aéronef.**

(30) Priorité : 24.09.80 FR 8020490

(43) Date de publication de la demande :
31.03.82 Bulletin 82/13

(45) Mention de la délivrance du brevet :
26.06.85 Bulletin 85/26

(84) Etats contractants désignés :
DE GB IT

(56) Documents cités :
FR-A- 2 153 254
FR-A- 2 261 177
FR-A- 2 463 054
GB-A- 615 318

(73) Titulaire : SOCIETE NATIONALE INDUSTRIELLE
AEROSPATIALE
37 boulevard de Montmorency
F-75016 Paris Cedex 16 (FR)

Office National d'Etudes et de Recherches Aerospatiales (O.N.E.R.A.)
29 Avenue de la Division Leclerc
F-92320 Châtillon-sous-Bagneux (FR)

(72) Inventeur : Thibert, Jean-Jacques
1 Square des Erables
F-91370 Verrieres Le Buisson (FR)
Inventeur : Rodde, Anne-Marie
3 Square des Poètes
F-91370 Verrieres Le Buisson (FR)
Inventeur : Pouradier, Jean-Marc Emile
Lycée Maurice Genevoix Chemin de Boimon
F-13700 Marignane (FR)

(74) Mandataire : Bonnetat, Christian
Cabinet PROPI Conseils 23 rue de Léningrad
F-75008 Paris (FR)

EP 0 048 649 B1

## Description

La présente invention concerne une pale pour voilure tournante d'aéronef et, plus particulièrement, un profil de pale pour voilure d'hélicoptère.

On sait que, pour les pales d'hélicoptère, la composition des vitesses de rotation et d'avancement engendre du côté de la pale avançante (angle d'azimut variant de 0 à 180°) des nombres de Mach relatifs variant d'environ 0,2 à l'emplanture à 0,85 en bout de pale, et du côté de la pale reculante (angle d'azimut variant de 180° à 360°) des nombres de Mach beaucoup plus faibles allant de 0,4 en bout de pale à 0, voire même à des valeurs négatives (profils attaqués par le bord de fuite), dans le cercle d'inversion près du moyeu. Ces valeurs de nombre de Mach ne sont bien entendu données qu'à titre indicatif, car elles dépendent des valeurs des vitesses de rotation du rotor et d'avancement de l'appareil.

De ce fait, pour conserver l'équilibre de l'appareil en roulis, il est nécessaire que la valeur du coefficient de portance $C_z$ et, par conséquent, celle de l'incidence, soient faibles pour la pale avançante et fortes pour la pale reculante. Les pales, au cours d'une rotation, sont donc alternativement soumises à de faibles incidences et à des vitesses élevées, puis à de fortes incidences et à des vitesses modérées. Les niveaux de nombre de Mach et d'incidence rencontrés par une section de pale étant fonction de la position de ladite section en envergure, l'optimisation des performances du rotor conduit à utiliser une pale à profil évolutif en envergure.

Ainsi, pour les sections situées au voisinage de l'extrémité de la pale, pour lesquelles les nombres de Mach sont les plus élevés, on utilise de préférence des profils possédant un Mach de divergence de traînée élevé pour les faibles niveaux de portance afin de réduire la traînée du rotor ; en revanche, pour les sections de pale voisines de l'emplanture, les profils doivent posséder de forts coefficients de portance maximale à des nombres de Mach modérés, pour éviter le décrochage en pale reculante. De plus, il existe pour les profils de pales d'hélicoptères un impératif qui est d'obtenir un coefficient de moment à portance nulle $C_{mo}$ le plus faible possible, pour éviter les vibrations et les efforts alternés élevés dans la chaîne de commande de pas du rotor, pouvant nuire à sa durée de vie en service.

Un moyen couramment utilisé pour obtenir de forts coefficients de portance maximale est de définir un profil dont la ligne moyenne, ou squelette, présente une cambrure importante ; cependant, une cambrure importante du squelette conduit à de forts coefficients de moment $C_{mo}$ et les performances de tels profils sont médiocres pour des nombres de Mach élevés, tels que ceux rencontrés en pale avançante.

L'objet de la présente invention concerne plus précisément un profil, qui est particulièrement bien adapté au moins pour les sections de la pale comprises entre l'emplanture et environ 75 % de l'envergure, et qui permet de retarder le phénomène de décrochage en pale reculante sans pour autant réduire les performances en pale avançante, conférant ainsi au rotor des performances améliorées en vol de manœuvre, en vol stationnaire ou en vol d'avancement de l'hélicoptère.

La géométrie particulière du dit profil, marquée notamment par la présence de nombreuses caractéristiques locales, confère à ce profil des valeurs remarquables du coefficient de portance maximum pour des nombres de Mach compris entre 0,3 et 0,5, obtenues conjointement avec de très faibles valeurs du coefficient de moment $C_{mo}$ à portance nulle, jusqu'à des nombres de Mach de 0,75, sans avoir recours à des artifices tels que des stabilisateurs de bord de fuite qui, braqués pour réduire la valeur $C_{mo}$, augmentent le coefficient de traînée du profil et diminuent la portance maximale de celui-ci.

Par rapport au document GB-A-615 318 qui décrit déjà un profil de voilure d'aéronef comportant, entre le bord d'attaque et le bord de fuite, un intrados convexe et un extrados convexe sur la plus grande partie de sa longueur, mais concave au voisinage du bord de fuite, l'extrados comportant une première zone I, s'étendant du bord d'attaque jusqu'au plus 30 % de la longueur de la corde en direction du bord de fuite, dans laquelle la courbure décroît rapidement et une seconde zone II, faisant suite à ladite première en direction du bord de fuite et s'étendant jusqu'au moins 60 % de la longueur de la corde à partir du bord d'attaque, dans laquelle la courbure subit peu de variation, l'invention est caractérisée en ce que ledit profil est un profil de voilure tournante d'aéronef, en ce qu'il présente une épaisseur relative maximale comprise entre environ 11 et 15 % et en ce que l'extrados du profil comporte une telle première zone I s'étendant du bord d'attaque jusqu'à environ 20 % de la longueur de la corde en direction du bord de fuite et constituée d'une première région Ia allant du bord d'attaque, où la courbure est maximale et choisie comme base égale à 100, jusqu'à moins de 1 % de la longueur de la corde, d'une seconde région Ib qui s'étend, en projection sur la corde du profil, sur une longueur au plus égale à 1 % de la longueur de ladite corde, qui est disposée de part et d'autre d'un point de la corde disposé à 1 % de la longueur de la corde à partir du bord d'attaque et dans laquelle la courbure est constante et voisine de 20, et d'une troisième région Ic suivant la seconde Ib et dans laquelle la courbure décroît de cette valeur voisine de 20 jusqu'à une valeur voisine de 1.

Cette particularité d'un léger palier dans la décroissance rapide de la courbure de l'extrados à partir du bord d'attaque permet de contrôler les survitesses à l'extrados et de minimiser l'augmentation de la survitesse sur ledit extrados, lorsque la portance augmente, évitant ainsi un décollement de la couche limite et permettant de ce fait d'obtenir des valeurs remarquables pour le coefficient de portance maximale.

**0 048 649**

On remarquera que le document GB-A-615 318 décrit un profil d'aile fixe présentant apparemment une allure générale voisine de celle du profil de l'invention, sauf en ce qui concerne ledit léger palier dans la décroissante de courbure d'extrados. Par ailleurs, le document FR-A-2 261 177 décrit une pale de rotor pour hélicoptères.

De préférence, dans le profil selon l'invention, ladite région de l'extrados à courbure sensiblement constante est centrée autour d'un point dont la projection sur la corde du profil se trouve à une distance du bord d'attaque au moins égale à 0,5 % de la longueur de ladite corde.

La seconde zone de l'extrados s'étend jusqu'à environ 70 % de longueur de la corde à partir du bord d'attaque et la courbure de cette seconde zone est sensiblement constante et voisine de 1.

Cette seconde zone de l'extrados est suivie d'une troisième zone constituée elle-même d'une première région s'étendant jusqu'à environ 80 % de la longueur de la corde et dans laquelle la courbure diminue de ladite valeur sensiblement soisine 1 à 0, d'une seconde région s'étendant jusqu'à environ 97 % de la longueur de la corde et dans laquelle la courbure continue de diminuer de 0 à environ −5, et d'une troisième région allant jusqu'au bord de fuite et dans laquelle la courbure croît d'environ −5 jusqu'à 0.

Dans ladite troisième zone, l'extrados présente donc une inversion de courbure, de laquelle résulte la concavité de la partie arrière de l'extrados, provoquant l'apparition aux faibles niveaux de portance, d'une zone de portance négative qui permet d'obtenir de très faibles valeurs du coefficient de moment $C_{mo}$.

La distribution particulière des courbures à l'extrados du profil, dans la région du bord d'attaque et dans la région du bord de fuite, permet donc d'obtenir conjointement des valeurs remarquables du $C_{z\,max}$ et de faibles valeurs de $C_{mo}$, sans avoir recours à des artifices tels que des stabilisateurs de bord de fuite, qui détériorent les performances des profils.

Pour conférer audit profil, outre des valeurs remarquables du $C_{z\,max}$ et du $C_{mo}$, de bonnes performances dans le secteur de la pale avançante, c'est-à-dire à faible $C_z$ et nombre de Mach élevé, le profil selon l'invention présente un intrados convexe qui comporte une première zone allant du bord d'attaque à une distance dudit bord d'attaque, le long de la corde, égale à environ 1,5 % de la longueur de la corde, dans laquelle la courbure décroît continûment depuis une valeur maximale choisie comme base égale à 100 au bord d'attaque à une valeur voisine de 10 à l'extrémité de cette zone, suivie d'une seconde zone dans laquelle la courbure décroît également, mais moins rapidement que dans ladite première zone et qui s'étend jusqu'à environ 10 % de la longueur de la corde où la courbure atteint une valeur voisine de 1. Ladite première zone de courbure d'extrados permet de limiter le niveau de la survitesse à l'intrados du profil aux faibles niveaux de portance, tandis que ladite seconde zone permet, aux nombres de Mach élevés, d'obtenir une recompression de l'écoulement, après la survitesse, recompression évitant la formation d'onde de choc intense, conférant ainsi au profil un faible niveau de traînée et une valeur élevée du Mach de divergence de traînée, à faible niveau de portance. Ladite seconde zone de courbure d'intrados est suivie d'une troisième zone s'étendant jusqu'à environ 95 % de la longueur de la corde, dans laquelle la courbure est sensiblement constante et très faible. Cette troisième zone à faible courbure évite l'apparition de gradients de recompression importants, contribuant ainsi à l'obtention du faible niveau de traînée du profil.

Pour des raisons de contrôle local de l'écoulement et de construction, ladite troisième zone d'intrados est suivie d'une quatrième zone s'étendant approximativement sur 5 % de la corde, jusqu'au bord de fuite, dans laquelle l'intrados est rectiligne et sensiblement parallèle à la partie correspondante de l'extrados, le profil ayant ainsi au voisinage du bord de fuite une épaisseur sensiblement constante et égale à 0,4 % de la corde.

Pour pouvoir définir et engendrer facilement le profil conforme à l'invention, on peut définir l'extrados et l'intrados à l'aide de formules analytiques permettant de restituer les nombreuses caractéristiques géométriques particulières dudit profil.

A cette fin, dans un système d'axes orthogonaux OX, OY dont l'origine O est confondue avec le bord d'attaque, dont l'axe OX est confondu avec la corde et orienté positivement du bord d'attaque au bord de fuite et dont l'axe OY est orienté positivement de l'intrados vers l'extrados, et pour une épaisseur relative de 13 %, l'extrados peut être défini par les relations suivantes où X est l'abscisse, Y l'ordonnée, C la corde et x le rapport X/C :

— de X/C = 0 à X/C = 0,049
$$Y/C = 0,1745 \sqrt{x} + 1,1591\,x - 79,589\,x^2 + 344,71\,x^3$$
$$- 6.875,8\,x^4 + 504140\,x^5$$

— de X/C = 0,049 à X/C = 0,109
$$Y/C = -0,007614 \sqrt{x} + 1,8218\,x - 15,225\,x^2$$
$$+ 18,154\,x^3 + 682,97\,x^4 - 4.522,9\,x^5 + 8.498,4\,x^6$$

— de X/C = 0,109 à X/C = 0,285
$$Y/C = 0,24914 \sqrt{x} + 0,10962\,x - 1,2684\,x^2$$
$$- 0,85335\,x^3 + 15,34\,x^4 - 25,295\,x^5$$

3

— de X/C = 0,285 à X/C = 1

$$Y/C = -0,02173 + 0,34949 \sqrt{x} - 0,17603\, x - 0,26659\, x^2$$
$$+ 0,03833\, x^3 + 0,14407\, x^4 - 0,14359\, x^5$$
$$+ 0,68569\, x^6 - 1,4592\, x^7 + 0,84737\, x^8$$

Dans le même système d'axes, on utilisera pour l'intrados et toujours pour une épaisseur relative de 13 % les relations suivantes :

— de X/C de 0 à 0,503

$$Y/C = -0,11589 \sqrt{x} + 0,15852\, x - 0,13218\, x^2$$
$$- 0,72686\, x^3 + 3,4824\, x^4 - 5,4712\, x^5 + 3,0192\, x^6$$

— de X/C de 0,503 à 1

$$Y/C = -0,044809 + 0,073457 \sqrt{x} - 0,040754\, x$$
$$- 0,11866\, x^2 - 0,12597\, x^3 + 0,591\, x^4$$
$$- 0,34067\, x^5$$

Les différentes relations mathématiques mentionnées ci-dessus sont bien entendu valables pour une corde unitaire.

Ainsi, grâce à l'invention, on peut obtenir des voilures tournantes d'aéronefs particulièrement performantes. On remarquera qu'il n'est pas indispensable pour obtenir les effets favorables mentionnés que la totalité de chaque pale de la voilure tournante présente le profil selon l'invention. Le principal est que la section interne de la pale présente le profil selon l'invention. Par exemple, pour une voilure tournante ayant un rayon égal à R, il est généralement suffisant que la section interne de la pale comprise entre l'emplanture et 0,75 R, soit conforme à l'invention. Si la totalité de la pale présente le profil selon l'invention, on obtient un aéronef susceptible de porter de lourdes charges.

Par ailleurs, on peut obtenir des profils d'épaisseurs relatives voisines de 13 % possédant également de bonnes performances, c'est-à-dire des $C_z$ maximum élevés pour des nombres de Mach compris entre 0,3 et 0,5, de faibles $C_{mo}$ et des nombres de Mach de divergence de traînée importants à faible $C_z$, à partir des ordonnées du profil de 13 % décrit précédemment. Ainsi, pour une gamme d'épaisseurs relatives variant de 11 à 15 %, on pourra obtenir des profils à hautes performances en multipliant les ordonnées Y/C du profil de 13 % déduites des formules précédentes par le rapport de l'épaisseur relative souhaitée à 0,13.

Les figures du dessin annexé feront bien comprendre comment l'invention peut être réalisée.

La figure 1 est une vue générale du profil de pale selon l'invention.

La figure 2 est un diagramme donnant la variation de la courbure de l'extrados $C_{ex}$ en fonction de l'abscisse réduite X/C le long de la corde. Pour des raisons de reproduction, le diagramme de la figure 2 porte en abscisses la racine carrée de l'abscisse réduite X/C et en ordonnées la racine carrée de la courbure $C_{ex}$.

La figure 3 est un diagramme donnant la variation de la courbure de l'intrados $C_{int}$ en fonction de l'abscisse réduite X/C le long de la corde. Pour des raisons de reproduction, le diagramme de la figure 3 porte en abscisses la racine carrée de l'abscisse réduite X/C et en ordonnées la racine carrée de la courbure $C_{int}$.

La figure 4 est une vue agrandie du voisinage du bord d'attaque du profil de la figure 1.

La figure 5 est un diagramme illustrant l'évolution du coefficient de pression minimal à l'extrados $K_p$ mini.ex en fonction du coefficient de portance $C_z$, à un nombre de Mach égal à 0,4, pour le profil selon l'invention (courbe L) et pour le profil connu NACA 0012 (courbe M).

La figure 6 est un diagramme montrant la répartition de pression (coefficient $K_p$) le long de l'extrados (courbe 0) et de l'intrados (courbe P) du profil conforme à l'invention, pour un nombre de Mach de 0,4 et un coefficient de portance $C_z$ nul.

La figure 7 est un diagramme montrant la répartition de pression (coefficient $K_p$) le long de l'extrados (courbe Q) et de l'intrados (courbe R) du profil conforme à l'invention, pour un nombre de Mach de 0,72 et un coefficient de portance $C_z$ nul.

La figure 8 est un diagramme montrant l'évolution du coefficient de portance $C_z$ en fonction de l'incidence $\alpha$ pour le profil selon l'invention (courbe S) et pour le profil connu NACA 0012 (courbe T), pour un nombre de Mach égal à 0,4.

La figure 9 est un diagramme illustrant les évolutions du coefficient de traînée $C_x$ et du coefficient de moment $C_m$ du profil conforme à l'invention, en fonction du nombre de Mach M, pour un faible coefficient de portance $C_z$.

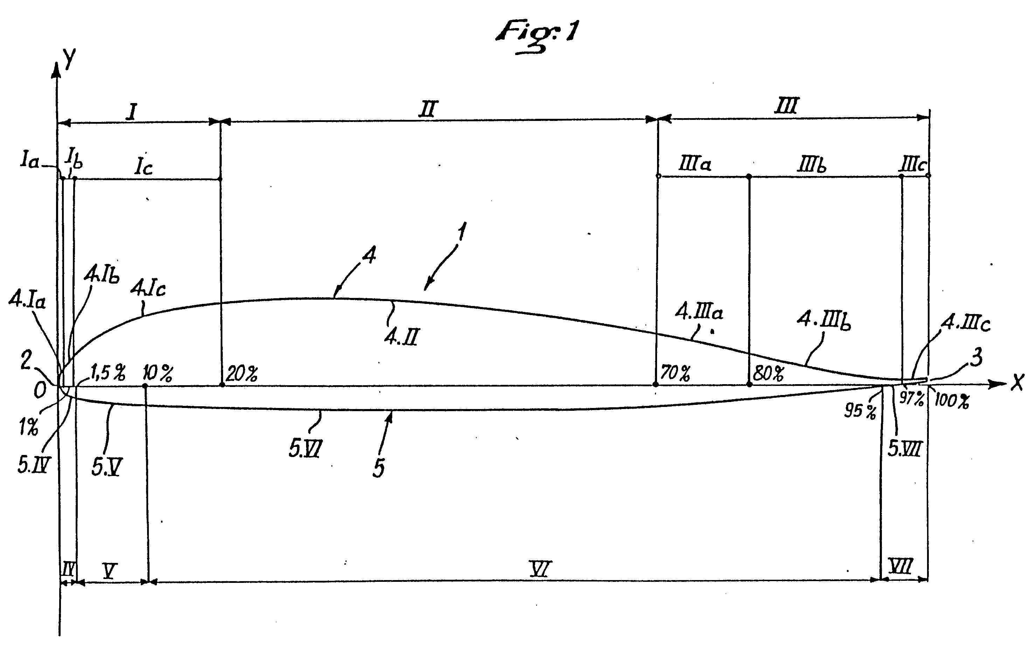

Le profil 1 selon l'invention, montré par la figure 1, comporte entre son bord d'attaque 2 et son bord de fuite 3 un extrados 4 convexe dans sa majeure partie, mais concave du côté du bord de fuite 3 et un intrados 5 convexe.

Pour faciliter la description, le profil 1 selon l'invention est rapporté à un système d'axes orthogonaux OX, OY, dont l'origine O est confondue avec le bord d'attaque 2, dont l'axe OX est confondu avec la corde du profil et orienté positivement du bord d'attaque 2 vers le bord de fuite 3 et dont l'axe OY est orienté positivement de l'intrados vers l'extrados. Sur ces axes OX et OY sont portées les coordonnées réduites du profil, c'est-à-dire rapportées à la longueur C de la corde.

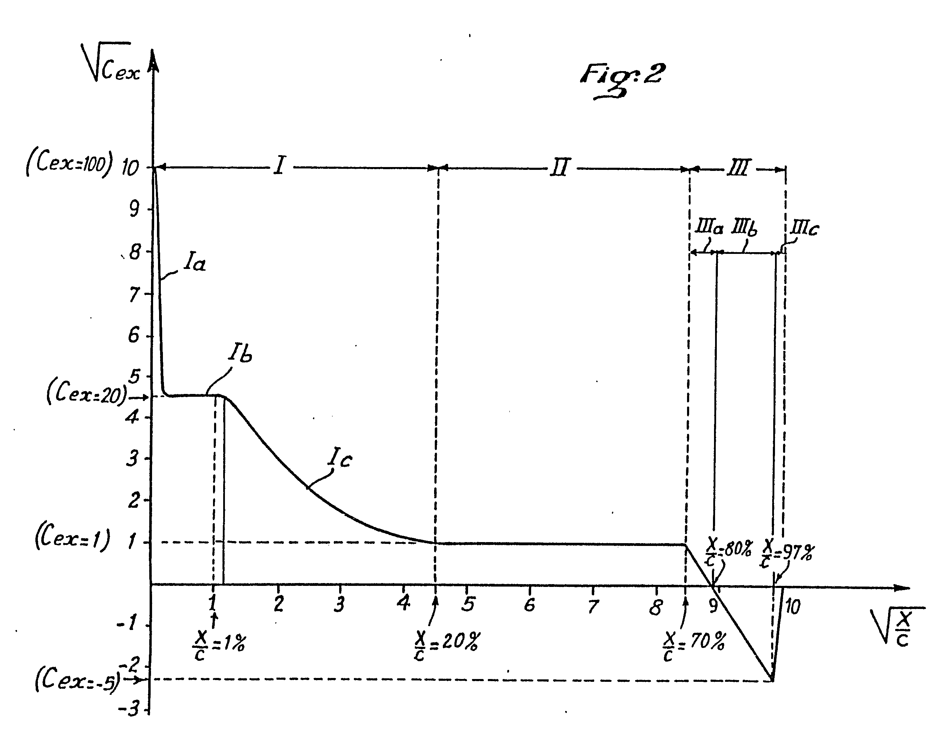

Comme le montrent les figures 1 et 2, la ligne d'extrados 4 du profil 1 comporte trois zones de courbure I, II et III.

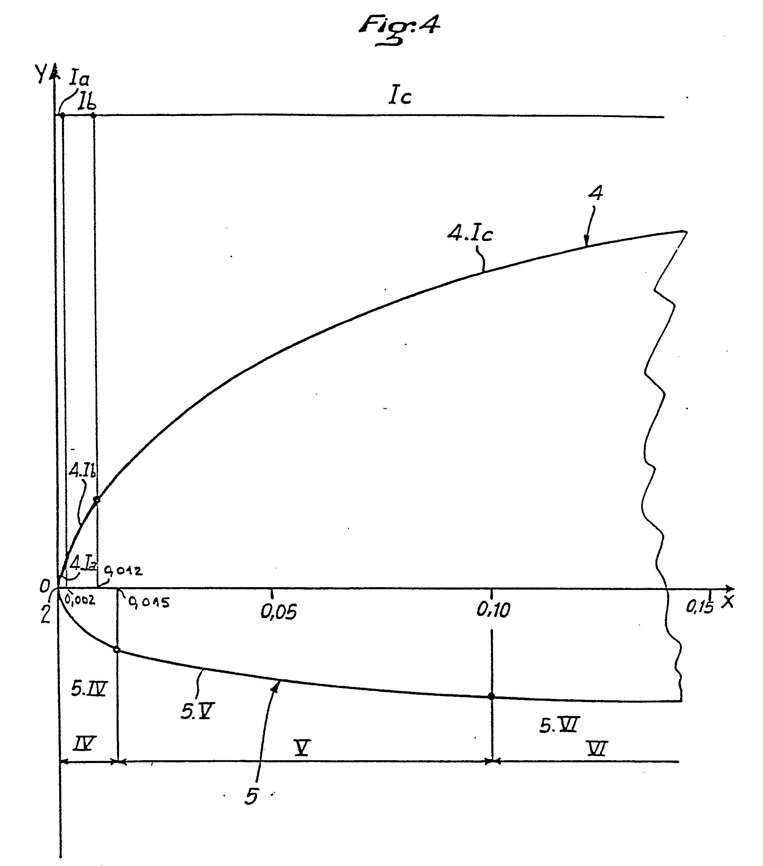

La première zone I qui débute (voir également la figure 4) au bord d'attaque 2 (O) où la courbure est choisie comme base égale à 100, comporte trois régions consécutives Ia, Ib et Ic. La première région Ia s'étend dudit bord d'attaque jusqu'à un point de la corde dont l'abscisse réduite est voisine de 0,2 %. Dans cette première région Ia, la courbure $C_{ex}$ de la portion d'extrados 4. Ia diminue rapidement de la valeur 100 à une valeur voisine de 20. La première région Ia est suivie de la seconde région Ib de la première zone I. Cette seconde région Ib s'étend entre les points de la corde dont les abscisses réduites sont approximativement 0,2 % et 1,2 % et la courbure $C_{ex}$ de la portion d'extrados 4.Ib y est sensiblement constante et voisine de 20. Enfin, la seconde région Ib est suivie de la troisième région Ic s'étendant jusqu'à une abscisse réduite d'environ 20 % et dans laquelle la courbure $C_{ex}$ de la portion d'extrados 4.Ic diminue de la valeur 20 jusqu'à une valeur voisine de 1.

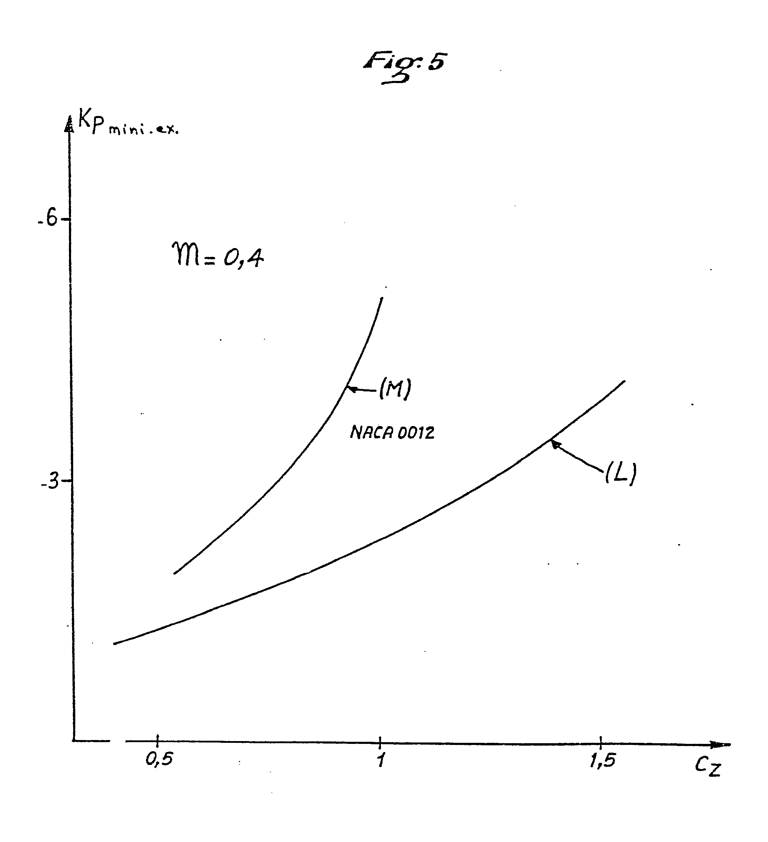

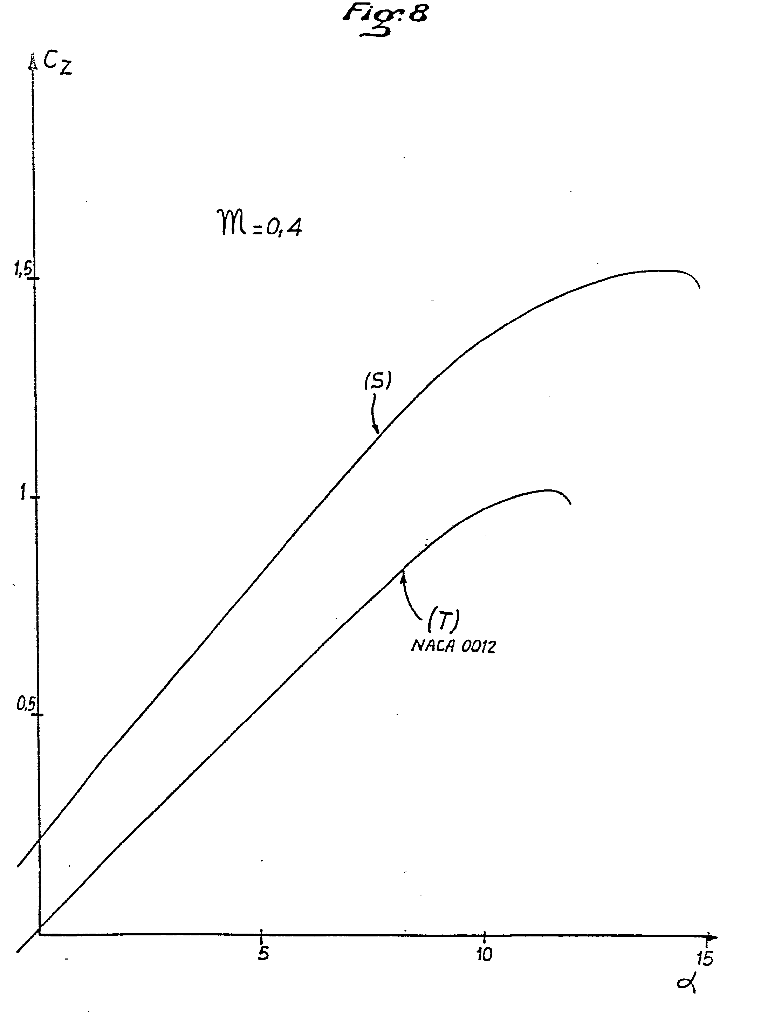

Grâce aux caractéristiques géométriques des portions d'extrados 4.Ia, 4.Ib et 4.Ic de la première zone I, on obtient à l'extrados du profil, pour des nombres de Mach inférieurs ou égaux à 0,5, en fonction du coefficient de portance $C_z$, des valeurs du coefficient de pression minimum $K_{p.mini.ex}$ bien inférieures, en valeur absolue, à celles obtenues avec un autre profil connu, comme le montre la figure 5 pour un nombre de Mach de 0,4. Cette faible survitesse permet de retarder considérablement l'apparition du décollement de la couche limite et d'obtenir des valeurs remarquables du $C_z$ maximum, comme le montre la fig. 8 où sont tracées les courbes de variation du coefficient de portance $C_z$ en fonction de l'incidence mesurée en soufflerie dans les mêmes conditions, pour le profil selon l'invention (courbe S) et un autre profil classique utilisé sur les hélicoptères.

La première zone I de courbure de l'extrados est suivie d'une seconde zone II s'étendant entre 20 % et 70 % de la corde et dans laquelle la courbure $C_{ex}$ de la portion d'extrados 4.II présente une valeur ·sensiblement constante et égale à 1.

Dans la région du bord de fuite 3, la courbure $C_{ex}$ est définie par une troisième zone III, allant de 70 % de la corde audit bord de fuite et elle-même subdivisée en trois régions IIIa, IIIb et IIIc. Dans la première région IIIa, qui s'étend jusqu'à environ 80 % de la corde, la courbure $C_{ex}$ de la portion d'extrados 4.IIIa passe de la valeur 1 à la valeur 0. Dans la seconde région IIIb, consécutive à la région IIIa, et s'étendant jusqu'à 97 % de la corde, la courbure $C_{ex}$ de la portion d'extrados 4.IIIb est négative et décroît de 0 à environ − 5. Enfin, dans la troisième région IIIc, la courbure $C_{ex}$ de la portion d'extrados 4.IIIc reste négative, mais augmente de − 5 jusqu'à 0 au bord de fuite 3.

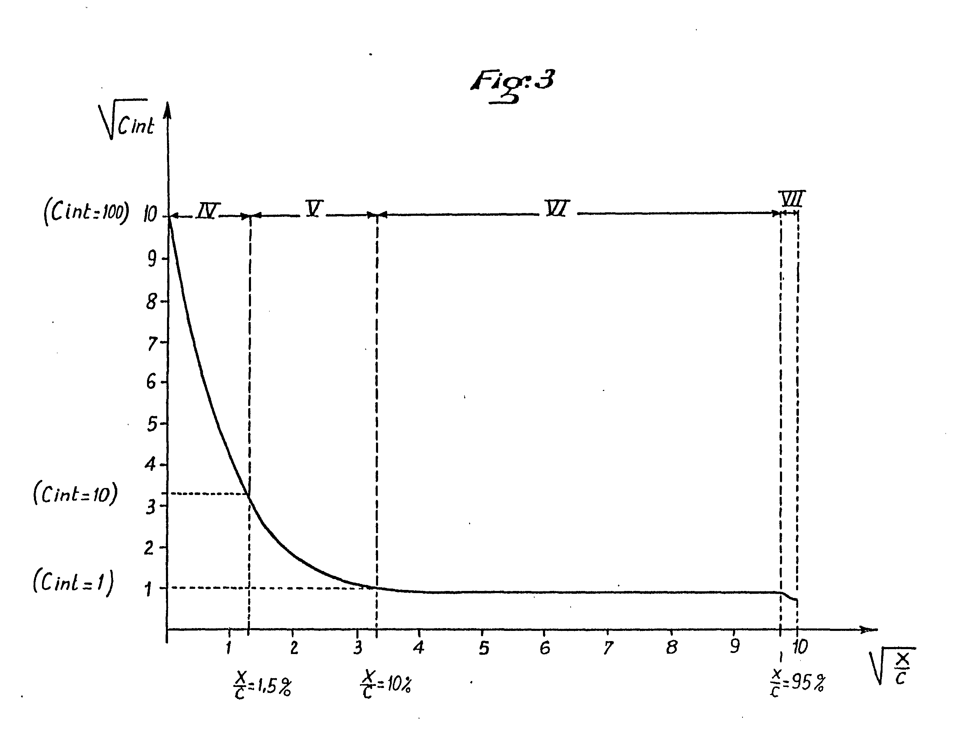

Par ailleurs, comme montré par les figures 1, 3 et 4, la ligne d'intrados 5 du profil 1 comporte quatre régions de courbure IV, V, VI et VII, consécutives, correspondant respectivement à quatre portions d'extrados 5.IV, 5.V, 5.VI et 5.VII.

Pour conférer au profil 1 un nombre de Mach de divergence de traînée élevé à faible $C_z$ et un faible coefficient de traînée $C_x$, l'intrados 5 du profil conforme à l'invention présente une ligne 5.IV s'étendant du bord d'attaque 2 à un point situé à 1,5 % de la corde, dont la courbure $C_{int}$ diminue de la valeur 100 à une valeur voisine de 10, suivie de la ligne 5.V se poursuivant jusqu'à 10 % de la corde ; la courbure $C_{int}$ de la ligne 5.V diminue en direction du bord de fuite, mais moins rapidement que pour la ligne 5.IV, la valeur de la courbure $C_{int}$ à la fin de la région IV étant voisine de 1. Cette ligne 5.V est suivie de la ligne 5.VI s'étendant jusqu'à 95 % de la corde et présentant une courbure faible et sensiblement constante.

Cette géométrie particulière de·l'intrados 5 du profil 1, associée à la géométrie de la portion 4.II de l'extrados 4, dont la courbure est sensiblement constante et voisine de 1, permet de contrôler parfaitement l'écoulement fluide autour du profil 1 à des nombres de Mach élevés et notamment de réduire la survitesse à l'intrados et l'intensité de l'onde de choc de recompression qui se situe généralement sur la portion 5.V d'intrados, ainsi que l'intensité de l'onde de choc à l'extrados se situant sur la portion 4.II dudit extrados pour des nombres de Mach de fonctionnement compris entre 0,7 et 0,8, nombres de Mach rencontrés par la pale avançante de la voilure tournante.

Par ailleurs, l'intrados 5 comporte dans la région du bord de fuite 3, la ligne 5.VII (région VII) s'étendant entre 95 % de la corde à partir du bord d'attaque 2 et le bord de fuite 3. La courbure $C_{int}$ de la portion d'intrados 5.VII est faible et sensiblement constante.

Les portions 4.IIIb, 4IIIc de l'extrados et la portion 5.VII de l'intrados confèrent une géométrie particulière à la région du bord de fuite, avec inversion de courbure de l'extrados et constance de l'épaisseur du profil entre 95 % de la corde et le bord de fuite 3. Cette épaisseur constante peut être égale à 0,4 % de la longueur C de la corde.

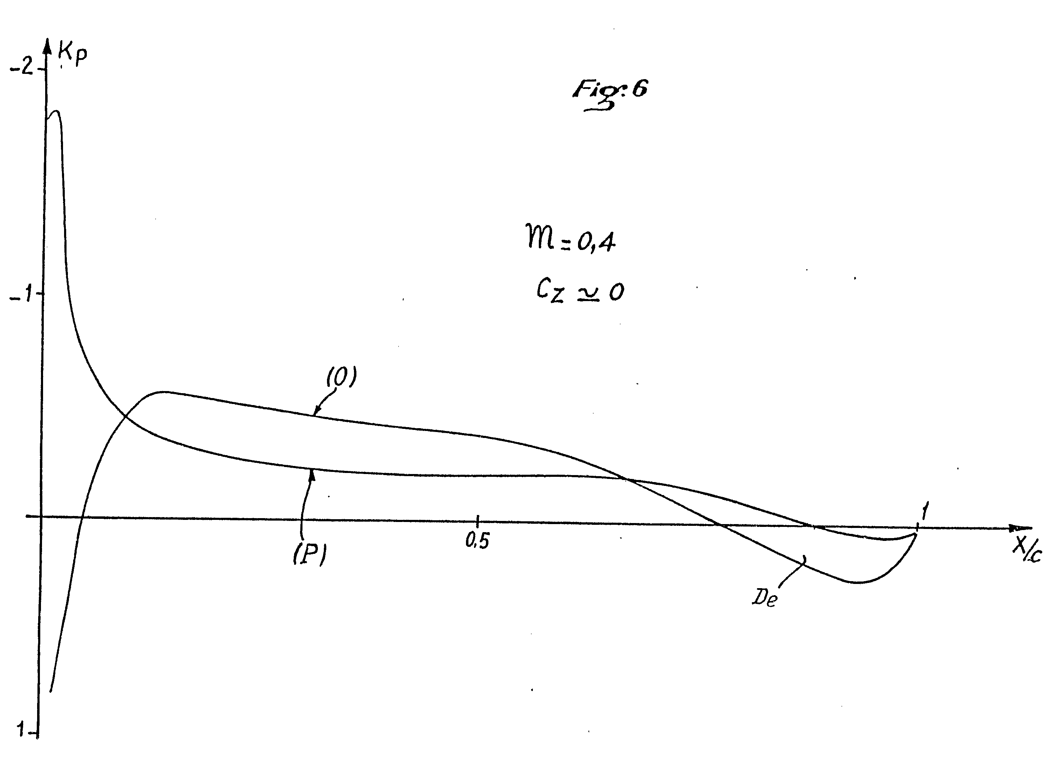

Cette géométrie particulière au voisinage du bord de fuite permet d'obtenir une zone de déportance De à l'arrière du profil 1, comme le montre la figure 6, sur laquelle est tracée la répartition des pressions (coefficient $K_p$) mesurées autour du profil pour un nombre de Mach de 0,4 et un faible niveau de portance, zone de déportance qui permet d'obtenir des coefficients de moment très faibles.

Ainsi les géométries particulières du profil 1 au voisinage du bord d'attaque 2 et du bord de fuite 3 permettent d'obtenir conjointement des valeurs remarquables pour le coefficient de portance $C_z$ maximum et de faibles valeurs pour le coefficient $C_{mo}$ de moment à portance réelle.

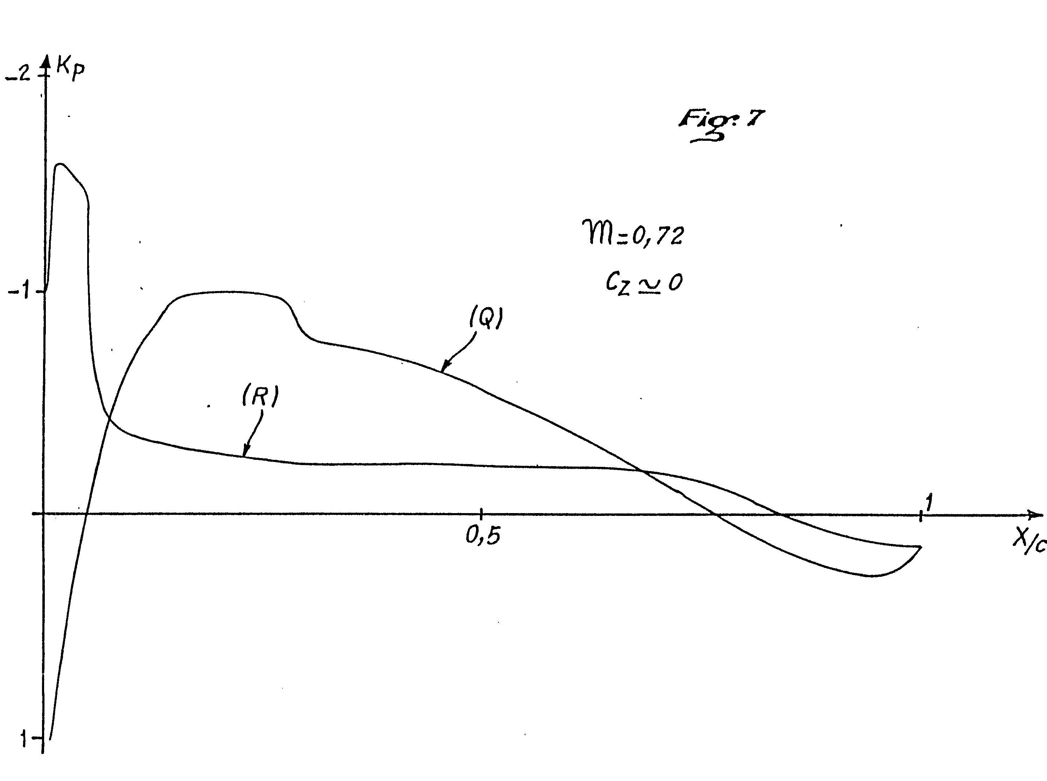

La figure 7, sur laquelle est tracée la répartition des pressions (coefficient $K_p$) autour du profil selon l'invention pour un nombre de Mach de 0,72 et un faible coefficient de portance, montre bien que la survitesse à l'intrados est faible et que les intensités des ondes de chocs à l'extrados et à l'intrados sont modérées, ce qui confère au profil un nombre de Mach de divergence de traînée élevé et un faible niveau de $C_x$, la géométrie particulière du bord de fuite assurant par ailleurs un faible niveau de moment $C_m$ même à des nombres de Mach élevés.

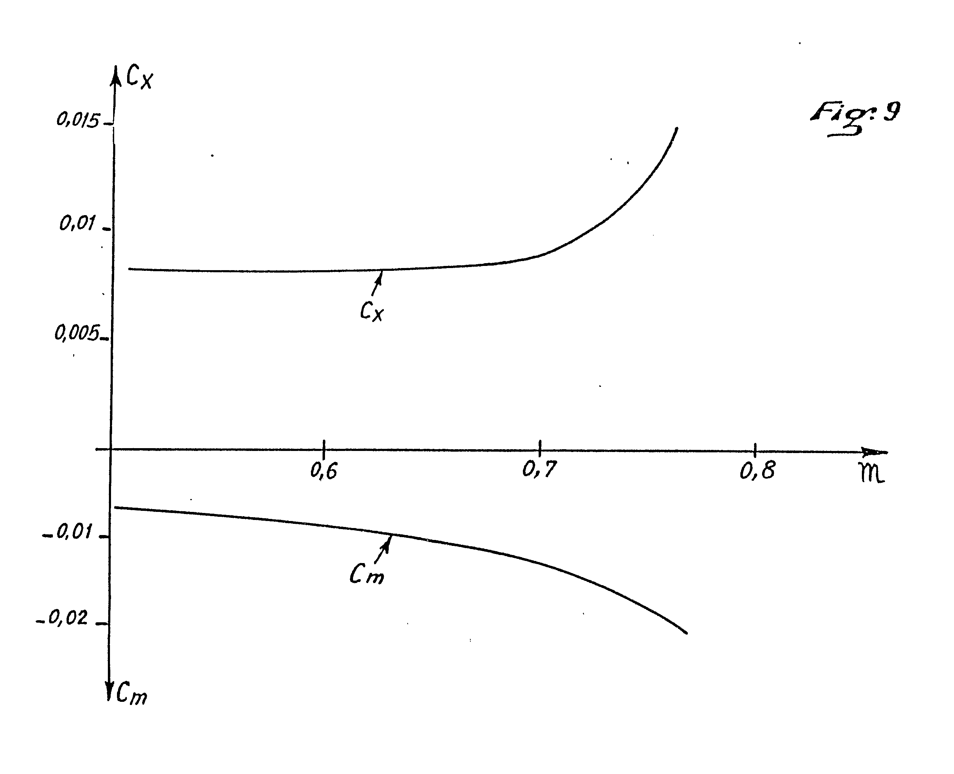

La fig. 9 illustre parfaitement le bon fonctionnement du profil en régime transsonique, tant au point de vue de la traînée que de la valeur du coefficient de moment $C_m$.

Des essais comparatifs effectués dans les mêmes conditions ont révélé, par rapport à un profil classique de référence NACA 0012, de remarquables résultats. Par exemple les coefficients de portance maxima un $C_z$ à $M_o = 0,4$ et $M_o = 0,5$ sont augmentés de 50 % (voir la figure 8). Par ailleurs, le nombre de Mach de divergence de traînée à portance nulle est de 0,755 et le niveau de $C_m$ pour un $C_z$ voisin de 0 ne dépasse pas − 0,015 pour des nombres de Mach amont inférieurs ou égaux à 0,73. (voir la figure 9).

Les excellentes performances de ce profil assurent de hautes performances en vol, notamment en vol de manœuvre et en vol stationnaire.

Le profil selon l'invention permet donc de définir une pale à hautes performances applicables à tous types de rotors d'aéronefs, tels que les hélicoptères.

Les équations données ci-dessus pour un profil d'épaisseur relative maximale égale à 13 % permettent de tracer aisément tout profil selon l'invention, dont l'épaisseur relative maximale est comprise entre 11 et 15 %, par multiplication des ordonnées par le rapport de l'épaisseur relative maximale désirée par 0,13.

## Revendications

1. Profil de voilure d'aéronef comportant, entre le bord d'attaque et le bord de fuite, un intrados convexe (5) et un extrados convexe (4) sur la plus grande partie de sa longueur, mais concave au voisinage du bord de fuite, l'extrados comportant une première zone I, s'étendant du bord d'attaque jusqu'au plus 30 % de la longueur de la corde en direction du bord de fuite, dans laquelle la courbure décroît rapidement et une seconde zone II, faisant suite à ladite première en direction du bord de fuite et s'étendant jusqu'au moins 60 % de la longueur de la corde à partir du bord d'attaque, dans laquelle la courbure subit peu de variation, caractérisé en ce que ledit profil est un profil de voilure tournante d'aéronef, en ce qu'il présente une épaisseur relative maximale comprise entre environ 11 et 15 % et en ce que l'extrados (4) du profil comporte une telle première zone I s'étendant du bord d'attaque (2) jusqu'à environ 20 % de la longueur de la corde en direction du bord de fuite et constituée d'une première région $I_a$ allant du bord d'attaque, où la courbure est maximale et choisie comme base égale à 100, jusqu'à moins de 1 % de la longueur de la corde, d'une seconde région $I_b$ qui s'étend, en projection sur la corde du profil, sur une longueur au plus égale à 1 % de la longueur de ladite corde, qui est disposée de part et d'autre d'un point de la corde disposé à 1 % de la longueur de la corde à partir du bord d'attaque et dans laquelle la courbure est constante et voisine de 20, et d'une troisième région $I_c$ suivant la seconde $I_b$ et dans laquelle la courbure décroît de cette valeur voisine de 20 jusqu'à une valeur voisine de 1.

2. Profil selon la revendication 1, caractérisé en ce que ladite région $I_b$ de l'extrados à courbure sensiblement constante est centrée autour d'un point dont la projection sur la corde du profil se trouve à une distance du bord d'attaque au moins égale à 0,5 % de la longueur de ladite corde.

3. Profil selon l'une des revendications 1 ou 2, caractérisé en ce que ladite seconde zone II s'étend jusqu'à environ 70 % de la longueur de la corde à partir du bord d'attaque et en ce que la courbure de cette seconde zone II est sensiblement constante et voisine de 1.

4. Profil selon la revendication 3, caractérisé en ce que ladite seconde zone II de l'extrados (4) est suivie d'une troisième zone III constituée elle-même d'une première région IIIa s'étendant jusqu'à environ 80 % de la longueur de la corde et dans laquelle la courbure diminue de ladite valeur sensiblement voisine de 1 à 0, d'une seconde région IIIb s'étendant jusqu'à environ 97 % de la longueur de la corde et dans laquelle la courbure continue de diminuer de 0 à environ − 5, et d'une troisième région IIIc allant jusqu'au bord de fuite et dans laquelle la courbure croît d'environ − 5 jusqu'à 0.

5. Profil selon l'une quelconque des revendications 1 à 4, caractérisé en ce que son intrados convexe (5) comporte une première zone IV allant du bord d'attaque à une distance dudit bord d'attaque, le long de la corde, égale à environ 1,5 % de la longueur de la corde, dans laquelle la courbure décroît continuement depuis une valeur maximale choisie comme base égale à 100 au bord d'attaque à une valeur voisine de 10 à l'extrémité de cette zone, suivie d'une seconde zone V dans laquelle la courbure décroît également, mais moins rapidement que dans ladite première zone et qui s'étend jusqu'à environ 10 % de la longueur de la corde où la courbure atteint une valeur voisine de 1.

6. Profil selon la revendication 5, caractérisé en ce que ladite zone V de courbure d'intrados est suivie d'une troisième zone VI s'étendant jusqu'à environ 95 % de la longueur de la corde, dans laquelle la courbure est sensiblement constante et très faible.

7. Profil selon la revendication 6, caractérisé en ce que ladite troisième zone VI d'intrados est suivie d'une quatrième zone VII s'étendant approximativement sur 5 % de la corde, jusqu'au bord de fuite, dans laquelle l'intrados est rectiligne et sensiblement parallèle à la partie correspondante de l'extrados.

8. Profil selon la revendication 7, caractérisé en ce que, au voisinage du bord de fuite, l'épaisseur constante du profil est sensiblement égale à 0,4 % de la corde.

9. Profil selon l'une quelconque des revendications 1 à 8, présentant une épaisseur relative maximale de 13 %, et rapporté à un système d'axes orthogonaux OX, OY dont l'origine 0 est confondue avec le bord d'attaque, dont l'axe OX est confondu avec la corde et orienté positivement du bord d'attaque vers le bord de fuite et dont l'axe OY est orienté positivement de l'intrados vers l'extrados, caractérisé en ce que son extrados (4) est défini par les relations suivantes dans lesquelles C est la longueur de la corde et x le rapport X/C :

— de X/C = 0 à X/C = 0,049
$$Y/C = 0,1745 \sqrt{x} + 1,1591 \, x - 79,589 \, x^2 + 344,71 \, x^3 - 6.875,8 \, x^4 + 504140 \, x^5$$

— de X/C = 0,049 à X/C = 0,109
$$Y/C = - 0,007614 \sqrt{x} + 1,8218 \, x - 15,225 \, x^2 + 18,154 \, x^3 + 682,97 \, x^4 - 4.522,9 \, x^5 + 8.498,4 \, x^6$$

— de X/C = 0,109 à X/C = 0,285
$$Y/C = 0,24914 \sqrt{x} + 0,10962 \, x - 1,2684 \, x^2 - 0,85335 \, x^3 + 15,34 \, x^4 - 25,295 \, x^5$$

— de X/C = 0,285 à X/C = 1
$$Y/C = 0,02173 + 0,34949 \sqrt{x} - 0,17603 \, x - 0,26659 \, x^2 + 0,03833 \, x^3 + 0,14407 \, x^4 - 0,14359 \, x^5 + 0,68569 \, x^6 - 1,4592 \, x^7 + 0,84737 \, x^8$$

10. Profil selon les revendications 1 à 9, présentant une épaisseur relative maximale de 13 %, et rapporté à un système d'axes orthogonaux OX, OY dont l'origine 0 est confondue avec le bord d'attaque, dont l'axe OX est confondu avec la corde et orienté positivement du bord d'attaque vers le bord de fuite et dont l'axe OY est orienté positivement de l'intrados vers l'extrados, caractérisé en ce que son intrados (5) est défini par les relations suivantes dans lesquelles C est la longueur de la corde et x le rapport X/C :

— de X/C de 0 à 0,503
$$Y/C = - 0,11589 \sqrt{x} + 0,15852 \, x - 0,13218 \, x^2 - 0,72686 \, x^3 + 3,4824 \, x^4 - 5,4712 \, x^5 + 3,0192 \, x^6$$

— de X/C de 0,503 à 1
$$Y/C = - 0,044809 + 0,073457 \sqrt{x} - 0,040754 \, x - 0,11866 \, x^2 - 0,12597 \, x^3 + 0,591 \, x^4 - 0,34067 \, x^5$$

11. Pale pour voiture tournante d'aéronef, caractérisé en ce qu'au moins les 75 % de la longueur de la pale à partir de l'emplanture présentent un profil tel que celui spécifié dans l'une quelconque des revendications 1 à 10.

**Claims**

1. Wing profile for aircraft comprising, between the leading edge and the trailing edge, a convex lower surface (5) and an upper surface (4) which is convex over the greater part of its length, but concave near the trailing edge, the upper surface comprising a first zone (I), extending from the leading edge up to at the most 30 % of the length of the chord in the direction of the trailing edge, in which the curvature decreases rapidly and a second zone (II), following said first in the direction of the trailing edge and extending up to at least 60 % of the length of the chord from the leading edge, in which the curvature undergoes little variation, characterized in that said wing profile is a profile for rotating wing of an aircraft, in that it presents a maximum relative thickness of between about 11 and 15 %, and in that the upper surface (4) of the profile comprises such a first zone (I) extending from the leading edge (2) up to about 20 % of the length of the chord in the direction of the trailing edge and constituted by a first region (Ia) going from the leading edge, where the curvature is maximum and chosen as base equal to 100, up to less than 1 % of the length of the chord, by a second region (Ib), which extends, in projection on the chord of the profile, over a length at the most equal to 1 % of the length of said chord, which is disposed on either side of a point of the chord disposed at 1 % of the length of the chord from the leading edge and in which the curvature is constant and close to 20, and by a third region (Ic) following the second (Ib), and in which the curvature decreases from this value close to 20 up to a value close to 1.

2. The wing profile of Claim 1, characterized in that said region (Ib) of the upper surface whith substantially constant curvature is centred about a point of which the projection on the chord of the profile is at a distance from the leading edge at least equal to 0,5 % of the length of said chord.

3. The wing profile of one of Claims 1 or 2, characterized in that said second zone (II) extrends up to about 70 % of the length of the chord from the leading edge and in that the curvature of said second zone (II) is substantially constant and equal to 1.

4. The wing profile of claim 3, characterized in that said second zone (II) of the upper surface (4) is followed by a third zone (III) itself constituted by a first region (IIIa), extending up to about 80 % of the length of the chord and in which the curvature decreases from said value substantially close to 1 to 0, by a second region (IIIb), extending up to about 97 % of the length of the chord and is which the curvature continues to decrease from 0 to about − 5, and by a third region (IIIc) going up to the trailing edge and in which the curvature increases from about − 5 to 0.

5. The wing profile of one of claims 1 to 4, characterized in that its convex lower surface (5) comprises a first zone (IV), going from the leading edge to a distance from said leading edge, along the chord, equal to 1,5 % of the length of the chord, in which the curvature decreases continuously from a maximum value chosen as base equal to 100 at the leading edge to value close to 10 at the end of this zone, followed by a second zone (V) in which the curvature also decreases, but less rapidly than in said first zone and which extends up to about 10 % of the length of the chord where the curvature reaches a value close to 1.

6. The wing profile of Claim 5, characterized in that said second zone (V) of curvature of the lower surface is followed by a third zone (VI) extending up to about 95 % of the length of the chord, in which the curvature is substantially constant and very small.

7. The wing profile of Claim 6, characterized in that said third zone (VI) of the lower surface is followed by a fourth zone (VII) extending substantially over 5 % of the chord, up to the trailing edge, in which the lower surface is rectilinear and substantially parallel to the corresponding part of the upper surface.

8. The wing profile of Claim 7, characterized in that, near the trailing edge, the constant thickness of the profile is substantially equal to 0,4 % of the chord.

9. The wing profile of one of Claims 1 to 8, presenting a maximum relative thickness of 13 % and referenced to a system of orthogonal axes OX, OY of which the origin 0 is merged with the leading edge, of which the axis OX is merged with the chord and oriented positively from the leading edge towards the trailing edge and of which the axis OY is oriented positively from the lower surface towards the upper surface, characterized in that its upper surface (4) is defined by the following relationships, in which C is the length of the chord and x the ration X/C :

— from X/C = 0 to X/C = 0.049
$$Y/C = 0.1745 \sqrt{x} + 1.1591\ x - 79.589\ x^2 + 344.71\ x^3 - 6{,}875.8\ x^4 + 504140\ x^5$$

— from X/C = 0.049 to X/C = 0.109
$$Y/C = - 0.007614 \sqrt{x} + 1.8218\ x - 15.225\ x^2 + 18.154\ x^3 + 682.97\ x^4 - 4.522.9\ x^5 + 8.498.4\ x^6$$

— from X/C = 0.109 to X/C = 0.285
$$Y/C = 0.24914 \sqrt{x} + 0.10962\ x - 1.2684\ x^2 - 0.85335\ x^3 + 15.34\ x^4 - 25.295\ x^5$$

— from X/C = 0.285 to X/C = 1
$$Y/C = - 0.02173 + 0.34949 \sqrt{x} - 0.17603\ x - 0.26659\ x^2 + 0.03833\ x^3 + 0.14407\ x^4 - 0.14359\ x^5 + 0.68569\ x^6 - 1.4592\ x^7 + 0.84737\ x^8$$

10. The wing profile of one of Claims 1 to 9, presenting a maximum relative thickness of 13 % and referenced to a system of orthogonal axes OX, OY of which the origin 0 is merged with the leading edge, of which the axis OX is merged with the chord and oriented positively from the leading edge towards the trailing edge and of which the axis OY is oriented positively from the lower surface towards the upper surface, characterized in that its lower surface (5) is defined by the following relationships in which C is the length of the chord and x the ratio X/C :

— for X/C from 0 to 0.503
$$Y/C = - 0.11589 \sqrt{x} + 0.15852\ x - 0.13218\ x^2 - 0.72686\ x^3 + 3.4824\ x^4 - 5.4712\ x^5 + 3.0192\ x^6$$

— for X/C from 0.503 to 1
$$Y/C = - 0.044809 + 0.073457 \sqrt{x} - 0.040754\ x - 0.11866\ x^2 - 0.12597\ x^3 + 0.591\ x^4 - 0.34067\ x^5$$

11. A blade for rotating wings of an aircraft, characterized in that at least 75 % of the length of the blade from the root presents a profile as specified in any one of Claims 1 to 10.

**Patentansprüche**

1. Flugzeugflügelprofil mit zwischen der Vorder- und Hinterkante einer konvexen Flügelunterseite (5) und einer konvexen Flügeloberseite (4) auf dem größten Teil seiner Länge, jedoch konkav in der Nähe der Hinterkante, wobei die Flügeloberseite eine Zone I, die sich von der Vorderkante bis auf höchstens 30 % der Länge der Sehne in Richtung der Hinterkante erstreckt, in der die Krümmung schnell abnimmt, und eine zweite Zone II aufweist, die auf die erste in Richtung der Hinterkante folgt und sich bis auf mindestens 60 % der Sehnenlänge ausgehend von der Vorderkante erstreckt und in der die Krümmung nur geringe Veränderungen erfährt, dadurch gekennzeichnet, daß das Profil ein Drehflügelprofil ist, daß es eine relative maximale Dicke zwischen etwa 11 und 15 % aufweist und daß die Flügeloberseite (4) eine erste Zone I aufweist, die sich von der Vorderkante (2) bis auf ungefähr 20 % der Sehnenlänge in Richtung Hinterkante erstreckt und sich zusammensetzt aus einer ersten Region $I_a$, die ausgeht von der Vorderkante, wo die Krümmung maximal und als Basis gleich 100 gewählt ist, bis auf mindestens 1 % der Sehnenlänge, aus einer zweiten Region $I_b$, die sich projiziert auf die Sehne des Profils auf einer Länge erstreckt, die höchstens 1 % der Sehnenlänge entspricht, und die sich beiderseits eines Punktes der Sehne befindet, der ausgehend von der Vorderkante bei 1 % der Sehnenlänge liegt, und in der die Krümmung konstant ist und bei etwa 20 liegt, und aus einer dritten Region $I_c$, die auf die zweite Region $I_b$ folgt und in der die Krümmung dieser Wertes von 20 bis auf einen Wert nahe 1 abnimmt.

2. Profil nach Anspruch 1, dadurch gekennzeichnet, daß die Region $I_b$ der Flügeloberseite mit allgemein konstanter Krümmung um einen Punkt zentriert ist, dessen Projektion auf der Sehne des Profils in einer Entfernung von der Vorderkante liegt, die zumindest 0,5 % der Sehnenlänge entspricht.

3. Profil nach einem der Ansprüche 1 oder 2, dadurch gekennzeichnet, daß sich die zweite Zone II bis auf etwa 70 % der Sehnenlänge ausgehend von der Vorderkante erstreckt und daß die Krümmung der zweiten Zone II allgemein konstant ist und nahe 1 liegt.

4. Profil nach Anspruch 3, dadurch gekennzeichnet, daß auf die zweite Zone II der Flügeloberseite (4) eine dritte Zone III folgt, die sich ihrerseits zusammensetzt aus einer ersten Region IIIa, die sich bis auf etwa 80 % der Sehnenlänge erstreckt und in der die Krümmung des allgemein bei 1 liegenden Wertes auf 0 abnimmt, aus einer zweiten Region IIIb, die sich bis auf etwa 97 % der Sehnenlänge erstreckt und in der die Krümmung von 0 auf ungefähr − 5 abnimmt, und aus einer dritten Region IIIc, die bis zur Hinterkante verläuft und in der die Krümmung von ungefähr − 5 bis auf 0 zunimmt.

5. Profil nach einem der Ansprüche 1 bis 4, dadurch gekennzeichnet, daß die konvexe Flügelunterseite (5) eine erste Zone IV, die längs der Sehne von der Vorderkante in einem Abstand von der Vorderkante verläuft, der etwa 1,5 % der Sehnenlänge entspricht, und in der die Krümmung ausgehend von einem mit der Basis 100 gewählten Maximalwert an der Vorderkante auf einen Wert 10 am Ende dieser Zone zurückgeht, und eine auf diese Zone folgende zweite Zone V aufweist, in der die Krümmung ebenfalls zurückgeht, jedoch weniger schnell als in der ersten Zone, und die sich bis auf etwa 10 % der Sehnenlänge erstreckt, wo die Krümmung einen nahe bei 1 liegenden Wert erreicht.

6. Profil nach Anspruch 5, dadurch gekennzeichnet, daß auf die zweite Zone V der Unterseitenkrümmung eine dritte Zone VI folgt, die sich bis auf etwa 95 % der Sehnenlänge erstreckt und in der Krümmung allgemein konstant und sehr schwach ist.

7. Profil nach Anspruch 6, dadurch gekennzeichnet, daß auf die dritte Zone VI der Unterseite eine vierte Zone VII folgt, die sich annähernd auf 5 % der Sehne bis zur Hinterkante erstreckt und in der die Flügelunterseite geradlinig und allgemein parallel zum entsprechenden Teil der Flügeloberseite verläuft.

8. Profil nach Anspruch 7, dadurch gekennzeichnet, daß in der Nähe der Hinterkante die konstante Dicke des Profils praktisch 0,4 % der Sehne ausmacht.

9. Profil nach einem der Ansprüche 1 bis 8, bei dem die relative Maximaldicke bei 13 % liegt und das auf ein Orthodiagonalsystem OX, OY bezogen ist, dessen Nullpunkt mit der Vorderkante zusammenfällt, dessen OX-Achse mit der Sehne zusammenfällt und positiv von der Vorder- zur Hinterkante ausgerichtet ist, und dessen OY-Achse von der Flügelunterseite zur Flügeloberseite positiv ausgerichtet ist, dadurch gekennzeichnet, daß die Flügeloberseite durch nachstehende Beziehungen bestimmt ist, in denen C die Sehnenlänge und x das Verhältnis X/C darstellt :

— von X/C = 0 bis X/C = 0,049
$$Y/C = 0,1745 \sqrt{x} + 1,1591\, x - 79,589\, x^2 + 344,71\, x^3 - 6.875,8\, x^4 + 504140\, x^5$$

− von X/C = 0,049 bis X/C = 0,109
$$Y/C = - 0,007614 \sqrt{x} + 1,8218\, x - 15,225\, x^2 + 18,154\, x^3 + 682,97\, x^4 - 4.522,9\, x^5 + 8.498,4\, x^6$$

— von X/C = 0,109 bis X/C = 0,285
$$Y/C = 0{,}24914\ \sqrt{x} + 0{,}10962\ x - 1{,}2684\ x^2$$
$$- 0{,}85335\ x^3 + 15{,}34\ x^4 - 25{,}295\ x^5$$

— von X/C = 0,285 bis X/C = 1
$$Y/C = -\ 0{,}02173 + 0{,}34949\ \sqrt{x} - 0{,}17603\ x$$
$$- 0{,}26659\ x^2 + 0{,}03833\ x^3 + 0{,}14407\ x^4$$
$$- 0{,}14359\ x^5 + 0{,}68569\ x^6 - 1{,}4592\ x^7$$
$$+ 0{,}84737\ x^8.$$

10. Profil nach den Ansprüchen 1 bis 9, bei dem die relative Maximaldicke bei 13 % liegt und das auf ein Orthodiagonalsystem OX/OY bezogen ist, dessen Nullpunkt mit der Vorderkante zusammenfällt, dessen OX-Achse mit der Sehne zusammenfällt und positiv von der Vorder- zur Hinterkante ausgerichtet ist, und dessen OY-Achse von der Flügelunterseite zur Flügeloberseite positiv ausgerichtet ist, dadurch gekennzeichnet, daß die Flügelunterseite durch nachstehende Beziehungen bestimmt ist, in denen C die Sehnenlänge und x das Verhältnis X/C darstellt:

— von X/C von 0 bis 0,503
$$Y/C = -\ 0{,}11589\ \sqrt{x} + 0{,}15852\ x - 0{,}13218\ x^2$$
$$- 0{,}72686\ x^3 + 3{,}4824\ x^4 - 5{,}4712\ x^5 + 3{,}0192\ x^6$$

— von X/C von 0,503 bis 1
$$Y/C = -\ 0{,}044809 + 0{,}073457\ \sqrt{x} - 0{,}040754\ x$$
$$- 0{,}11866\ x^2 - 0{,}12597\ x^3 + 0{,}591\ x^4$$
$$- 0{,}34067\ x^5.$$

11. Hubschrauben- oder Rotorblatt, dadurch gekennzeichnet, daß zumindest die 75 % der Länge des Blattes von der Wurzel ausgehend ein Profil aufweist, wie es in einem der vorstehenden Ansprüche 1 bis 10 vorgeschrieben ist.

Fig.1

Fig.2

Fig.3

Fig.4

Fig. 5

Fig. 6

Fig. 7

M=0,72

$C_Z \simeq 0$

(Q)

(R)

0 048 649

## Fig. 8

Fig: 9

0 048 649